# EUROPÄISCHE PATENTSCHRIFT

(11) **EP 3 342 608 B1**
(45) Veröffentlichungstag und Bekanntmachung des Hinweises auf die Patenterteilung: **18.09.2019**
(21) Anmeldenummer: 17205503.0
(22) Anmeldetag: 05.12.2017
(51) Int. Cl.: B60H 1/00, B60H 1/22, H05B 3/14

(54) **VORRICHTUNG ZUR LUFTZUFÜHRUNG IN EINEN INNENRAUM EINES FAHRZEUGES**
DEVICE FOR SUPPLYING AIR TO THE INTERIOR OF A VEHICLE
DISPOSITIF D'ARRIVÉE D'AIR DANS UN HABITACLE D'UN VÉHICULE

(30) Priorität: 29.12.2016 DE 202016107478 U
(43) Veröffentlichungstag der Anmeldung: 04.07.2018
(73) Patentinhaber: REHAU AG + Co, 95111 Rehau (DE)
(72) Erfinder: Müller, Claus, 95028 Hof (DE)

(56) Entgegenhaltungen:
- EP-A1- 1 643 805
- EP-A2- 1 205 321
- DE-A1-102014 215 235
- DE-C1- 4 213 510
- DE-T5-112014 000 959
- DE-U1-202005 012 394
- JP-A- S 608 110

## Beschreibung

Die vorliegende Erfindung betrifft eine Vorrichtung zur Luftzuführung in einen Innenraum eines Fahrzeuges, mit
- einem strömungseingangsseitig angeordneten Zentralgebläse zur Erzeugung eines klimatisierten, insbesondere eines mittels einer Klimaanlage konditionierten Luftstroms,
- einer Vielzahl von Strömungskanälen zur Weiterleitung und Verteilung des Luftstroms an verschiedene Orte des Innenraums,
wobei die Strömungskanäle jeweils mindestens einen strömungsausgangsseitigen Kanalausgang oder mindestens einen Verbindungsbereich zu einem der anderen Strömungskanäle aufweisen.

Im Stand der Technik sind eine Vielzahl derartiger Vorrichtungen bekannt. Alle derartigen Vorrichtungen dienen dazu einen gekühlten, gereinigten, getrockneten oder einen beheizten Luftstrom an verschiedene Orte (z.B. Fahrersitz und Beifahrersitz, Rücksitze, Seitenscheiben, Fußraum, etc.) des Innenraums eines Kraftfahrzeugs zu transportieren. Der beheizte Luftstrom wird dabei ebenfalls über das Zentralgebläse bereitgestellt. Hierbei besteht jedoch das Problem, dass entlang der einzelnen Strömungskanäle ein nicht unerheblicher Temperaturverlust auftritt, sodass der Luftstrom überhitzt in die Strömungskanäle geleitet werden muss, damit diese Verluste am Kanalausgang kompensiert sind. Insbesondere bei rein elektrisch betriebenen Fahrzeugen steht jedoch nur ein begrenzter Energievorrat und keine ausreichende Abwärme von Aggregaten (wie bei einem Verbrennungsmotor) zur Verfügung, sodass die Fahrzeugbeheizung mittels einer herkömmlichen Vorrichtung zu großen Energieverlusten führt.

Vorrichtungen mit dezentralen Heizeinrichtungen sind aus den Dokumenten EP 1 205 321 A2, DE 10 2014 215 235 A1, JP S60 81 10 A, EP 1 643 805 A1 oder DE 20 2005 012 394 U1 vorbekannt Dokument EP1 643 805 A1 zeigt eine in einem aus zwei Halbschalen bestehenden Luftkanalstück angeordnete elektrische Heizeinrichtung.

Die Erfindung stellt sich daher die Aufgabe eine Vorrichtung mit den eingangs beschriebenen Merkmalen anzugeben, die gegenüber dem Stand der Technik die zur Verfügung stehende Heizenergie effizienter in Wärme umsetzt.

Erfindungsgemäß wird diese Aufgabe gelöst durch eine Vorrichtung zur Luftzuführung in einen Innenraum eines Fahrzeuges, mit
- einem strömungseingangsseitig angeordneten Zentralgebläse zur Erzeugung eines klimatisierten, insbesondere eines mittels einer Klimaanlage konditionierten Luftstroms,
- einer Vielzahl von Strömungskanälen zur Weiterleitung und Verteilung des Luftstroms an verschiedene Orte des Innenraums,
wobei die Strömungskanäle jeweils mindestens einen strömungsausgangsseitigen Kanalausgang oder mindestens einen Verbindungsbereich zu einem der anderen Strömungskanäle aufweisen, wobei erfindungsgemäß innerhalb des Strömungskanals im Bereich des jeweiligen Kanalausgangs und/oder im Verbindungsbereich zwischen miteinander verbundenen Strömungskanälen wenigstens eine, von dem Zentralgebläse beabstandete, dezentrale elektrische Heizeinrichtung angeordnet ist.

Die Anordnung von dezentralen elektrischen Heizeinrichtungen, die von dem Zentralgebläse beabstandet sind, bietet den großen Vorteil den Luftstrom erst kurz vor dessen Austritts aus dem Kanalausgang in den Innenraum aufzuheizen, sodass die Leitungsverluste im Vergleich zu einer zentralen Heizungseinrichtung deutlich verringert werden. Gleichzeitig können die dezentralen Heizeinrichtungen bedarfsgerecht angesteuert werden, sodass nur diejenigen Heizeinrichtungen mit Strom beaufschlagt werden zu denen eine Anforderung nach einem beheizten Luftstrom vorliegt.

Die dezentrale Heizeinrichtung kann eine thermoplastische Trägerstruktur und ein auf die Trägerstruktur aufgebrachtes, oder ein in die Trägerstruktur integriertes Heizmittel auf Basis von Kohlenstoff aufweisen. Das Heizmittel erwärmt sich bei einer Bestromung und gibt infolge die entstehende Wärme an die Tragstruktur und den Luftstrom ab.

Das Heizmittel umfasst bevorzugt Kohlenstofffasern oder Kohlenstoffnanoröhrchen.

Das Heizmittel kann auf die Tragstruktur in Form eines Lacks oder einer Bedampfungsschicht aufgebracht sein.

Die wenigstens eine Heizeinrichtung ist in einem separaten Verbindungselement des Strömungskanals zu einem weiteren Strömungskanal angeordnet.

Die Heizeinrichtung selbst bildet das Verbindungselement.

Die thermoplastische Trägerstruktur kann durch einen Teilbereich der Wandung des Strömungskanals oder des Aufsatzelements oder des Verbindungselements gebildet sein. Der Strömungskanal kann hierbei mittels eines generativen Verfahrens, mittels eines Blasformverfahrens oder mittels eines Thermoformverfahrens (insbesondere durch Vakuum-Tiefziehen mit 2 Platten aus thermoplastischem Material) hergestellt sein.

Die Trägerstruktur kann als Trägerfolie ausgebildet sein. Die Trägerfolie kann eine Dicke von 1 µm bis 2000 µm aufweisen.

Die Trägerstruktur kann gefaltet, gestapelt, aufgerollt, wabenartig, aufgewickelt und/oder gewellt ausgebildet sein.

Die Trägerstruktur kann im Wege der Extrusion oder im Spritzguss oder mittels eines generativen Verfahrens hergestellt sein.

Die Heizeinrichtung kann einen Abschnitt der Wandung des Strömungskanals oder des Aufsatzelements oder des Verbindungselements ersetzten.

Der Strömungskanal ist durch wenigstens zwei zusammengesetzte Segmente gebildet, wobei die Heizeinrichtung zwischen den Segmenten form- und/oder kraftschlüssig gehalten ist.

Die Heizeinrichtung kann über eine seitliche Öffnung in dem Strömungskanal in den Strömungskanal einführbar sein.

Die Heizeinrichtung kann mit einem die Öffnung verschließenden Deckel verbunden oder an einem die Öffnung verschließenden Deckel angeformt sein.

Die Wandung des Strömungskanals kann teilweise oder vollständig durch ein geschäumtes Kunststoffmaterial gebildet sein.

Im Folgenden wird die Erfindung anhand lediglich Ausführungsbeispiele darstellender Zeichnung erläutert. Es zeigen schematisch:
- Fig. 1 - 3: perspektivische Darstellungen einer ersten Variante eines Strömungskanals einer Vorrichtung;
- Fig. 4 - 7: perspektivische Darstellungen einer zweiten Variante eines Strömungskanals einer Vorrichtung;
- Fig. 8 - 12: perspektivische Darstellungen einer erfindungsgemäßen Variante eines Strömungskanals einer Vorrichtung;
- Fig. 13 - 16: perspektivische Darstellungen einer vierten Variante eines Strömungskanals einer Vorrichtung;
- Fig. 17: eine Vorrichtung mit einer Vielzahl von Strömungskanälen.

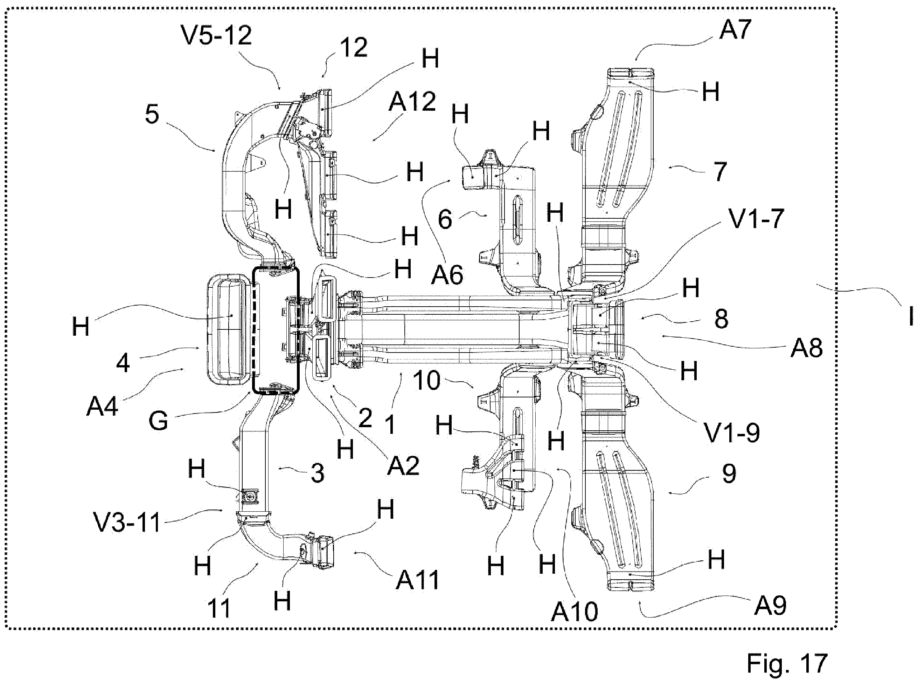

In Fig. 17 ist eine Vorrichtung dargestellt:
Vorrichtung zur Luftzuführung in einen Innenraum I (begrenzt durch die gepunktete Linie) eines Fahrzeuges, mit
- einem strömungseingangsseitig angeordneten Zentralgebläse G zur Erzeugung eines klimatisierten, insbesondere eines mittels einer Klimaanlage konditionierten (z.B. getrockneten oder gereinigten) Luftstroms,
- einer Vielzahl von Strömungskanälen 1, 2, 3, 5, 6, 7, 8, 9, 10, 11, 12, 13 zur Weiterleitung und Verteilung des Luftstroms an verschiedene Orte des Innenraums I,
wobei die Strömungskanäle 1, 2, 3, 5, 6, 7, 8, 9, 10, 11, 12, 13 jeweils mindestens einen strömungsausgangsseitigen Kanalausgang A2, A4, A6, A7, A8, A9, A10, A11, A12, A13 oder mindestens einen Verbindungsbereich V1-7, V1-9, V3-11, V5-12 zu einem der anderen Strömungskanäle 1, 2, 3, 5, 6, 7, 8, 9, 10, 11, 12, 13 aufweisen.

Innerhalb des Strömungskanals 1, 2, 3, 5, 6, 7, 8, 9, 10, 11, 12, 13 ist im Bereich des jeweiligen Kanalausgangs A2, A4, A6, A7, A8, A9, A10, A11, A12, A13 und/oder im Verbindungsbereich V1-7, V1-9, V3-11, V5-12 zwischen miteinander verbundenen Strömungskanälen 1, 3, 5, 7, 9, 11, 12 wenigstens eine, von dem Zentralgebläse G beabstandete, dezentrale elektrische Heizeinrichtung H angeordnet.

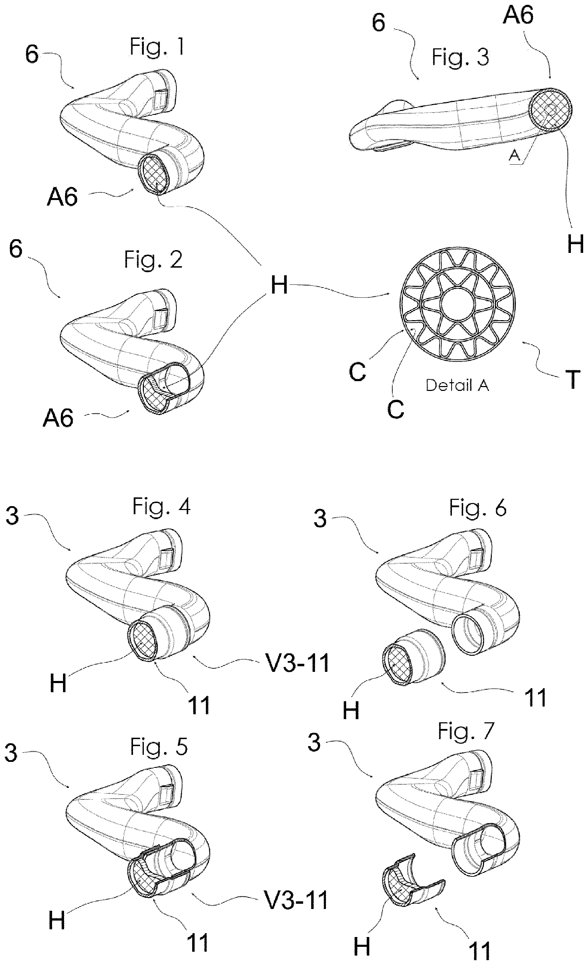

In Fig. 1 bis Fig. 3 ist eine erste Variante eines Strömungskanals 6 einer Vorrichtung dargestellt. Die dezentrale Heizeinrichtung H ist innerhalb des Strömungskanals 6 im Bereich des Kanalausgangs A6 angeordnet. In der vergrößerten Detaildarstellung des Details A aus Fig. 3 ist der Aufbau der Heizeinrichtung H erkennbar. Die Heizeinrichtung H weist eine thermoplastische Trägerstruktur T und ein auf die Trägerstruktur T aufgebrachtes Heizmittel C auf Basis von Kohlenstoff auf. Das Heizmittel C kann Kohlenstofffasern oder Kohlenstoffnanoröhrchen umfassen. Die Trägerstruktur T ist als Trägerfolie ausgebildet, die aufgewickelt und gewellt ausgebildet ist.

Die Fig. 4 bis Fig. 7 zeigen eine weitere Variante eines Strömungskanals 3 einer Vorrichtung. Hierbei ist innerhalb des Strömungskanals 11 im Verbindungsbereich V3-11 zwischen den miteinander verbundenen Strömungskanälen 3 und 11 wenigstens eine, von dem Zentralgebläse G beabstandete, dezentrale elektrische Heizeinrichtung H angeordnet. Natürlich kann die Heizeinrichtung hierbei auch innerhalb des Strömungskanals 3 angeordnet sein.

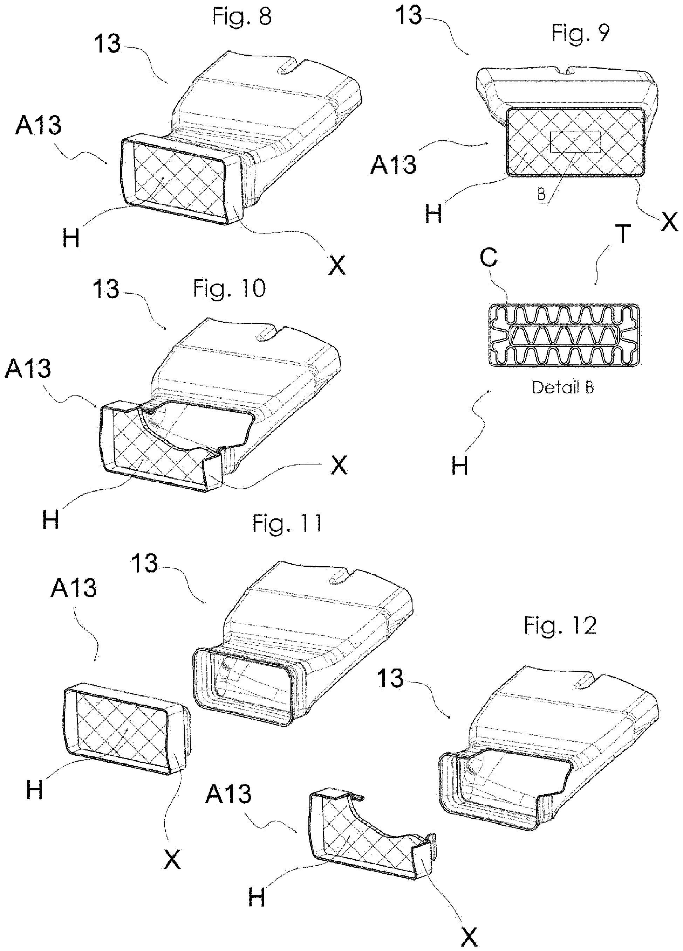

Die Fig. 8 bis Fig. 12 zeigen eine erfindungsgemäße Variante eines Strömungskanals 13 einer Vorrichtung. Hierbei ist die wenigstens eine Heizeinrichtung H in einem separaten Aufsatzelement X des Strömungskanals 13 angeordnet. Erfindungsgemäß ist das Aufsatzelement auch ein separates Verbindungselement des Strömungskanals 13 zu einem weiteren Strömungskanal und das Heizelement ist in dem Verbindungselement angeordnet. Ein separates Aufsatzelement X als Verbindungselement ermöglicht eine einfache Wartung, Reparatur oder Wechsel der Heizeinrichtung H. In der vergrößerten Detaildarstellung des Details B aus Fig. 9 ist der Aufbau der Heizeinrichtung H erkennbar. Die Heizeinrichtung H weist eine thermoplastische Trägerstruktur T und ein in die Trägerstruktur T integriertes Heizmittel C auf Basis von Kohlenstoff auf. Das Heizmittel C kann Kohlenstofffasern oder Kohlenstoffnanoröhrchen umfassen. Die Trägerstruktur T ist als Trägerfolie ausgebildet, die aufgewickelt und gewellt ausgebildet ist.

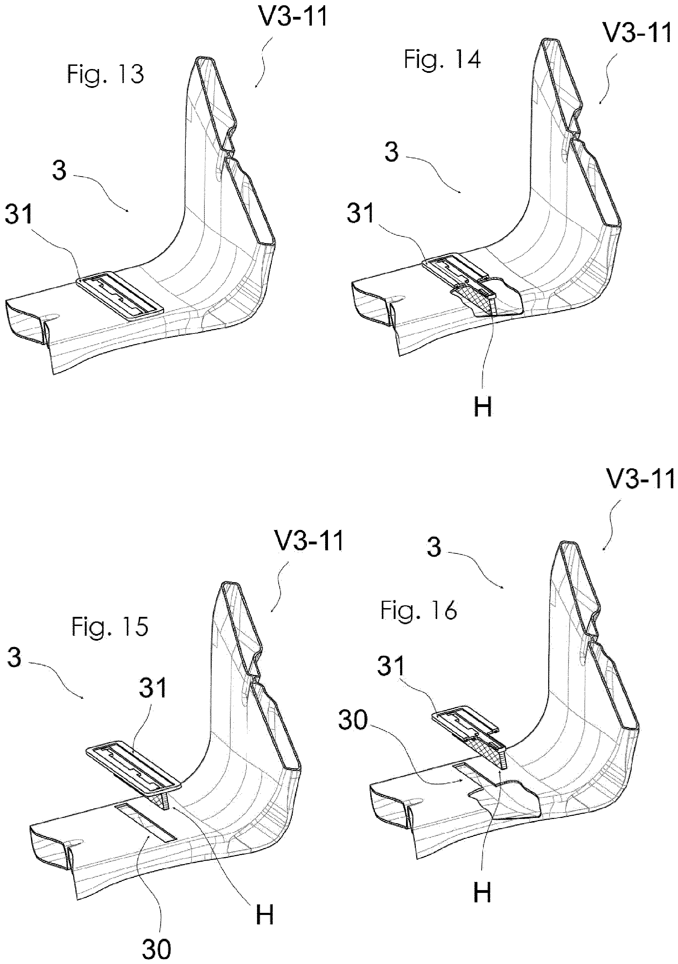

Die Fig. 13 bis Fig. 16 zeigen eine weitere Variante eines Strömungskanals 3 einer Vorrichtung. Innerhalb des Strömungskanals 3 ist im Verbindungsbereich V3-11 zwischen den miteinander verbundenen Strömungskanälen 3 und 11 eine, von dem Zentralgebläse G beabstandete, dezentrale elektrische Heizeinrichtung H angeordnet. Die Heizeinrichtung H ist über eine seitliche Öffnung 30 in dem Strömungskanal 3 in den Strömungskanal 3 einführbar. Die Heizeinrichtung ist mit einem die Öffnung 30 verschließenden Deckel 31 verbunden oder an einem die Öffnung 30 verschließenden Deckel 31 angeformt.

Generell gilt, dass die Wandung des Strömungskanals 1, 2, 3, 5, 6, 7, 8, 9, 10, 11, 12, 13 teilweise oder vollständig durch ein geschäumtes Kunststoffmaterial gebildet sein kann. Die thermoplastische Trägerstruktur T kann durch einen Teilbereich der Wandung des Strömungskanals 1, 2, 3, 5, 6, 7, 8, 9, 10, 11, 12, 13 oder des Aufsatzelements X oder des Verbindungselements gebildet sein. Die Heizeinrichtung H kann einen Abschnitt der Wandung des Strömungskanals 1, 2, 3, 5, 6, 7, 8, 9, 10, 11, 12, 13 oder des Aufsatzelements X oder des Verbindungselements ersetzen. Der Strömungskanal 1, 2, 3, 5, 6, 7, 8, 9, 10, 11, 12, 13 kann durch wenigstens zwei zusammengesetzte Segmente gebildet sein, wobei die Heizeinrichtung H zwischen den Segmenten form- und/oder kraftschlüssig gehalten ist.

## Patentansprüche

1. Vorrichtung zur Luftzuführung in einen Innenraum (I) eines Fahrzeuges, mit
- einem strömungseingangsseitig angeordneten Zentralgebläse (G) zur Erzeugung eines klimatisierten, insbesondere eines mittels einer Klimaanlage konditionierten Luftstroms,
- einer Vielzahl von Strömungskanälen (1, 2, 3, 5, 6, 7, 8, 9, 10, 11, 12, 13) zur Weiterleitung und Verteilung des Luftstroms an verschiedene Orte des Innenraums (I),
wobei die Strömungskanäle (1, 2, 3, 5, 6, 7, 8, 9, 10, 11, 12, 13) jeweils mindestens einen strömungsausgangsseitigen Kanalausgang (A2, A4, A6, A7, A8, A9, A10, A11, A12, A13) oder mindestens einen Verbindungsbereich (V1-7, V1-9, V3-11, V5-12) zu einem der anderen Strömungskanäle (1, 2, 3, 5, 6, 7, 8, 9, 10, 11, 12, 13) aufweisen,
wobei im Verbindungsbereich (V1-7, V1-9, V3-11, V5-12) zwischen miteinander verbundenen Strömungskanälen (1, 3, 5, 7, 9, 11, 12) wenigstens eine, von dem Zentralgebläse (G) beabstandete, dezentrale elektrische Heizeinrichtung (H) angeordnet ist,
**dadurch gekennzeichnet, dass**
die wenigstens eine Heizeinrichtung (H) in einem separaten Verbindungselement des Strömungskanals (13) zu einem weiteren Strömungskanal angeordnet ist, wobei die Heizeinrichtung selbst das Verbindungselement bildet.

2. Vorrichtung nach Anspruch 1, **dadurch gekennzeichnet, dass** die dezentrale Heizeinrichtung (H) eine thermoplastische Trägerstruktur (T) und ein auf die Trägerstruktur (T) aufgebrachtes, oder ein in die Trägerstruktur (T) integriertes Heizmittel (C) auf Basis von Kohlenstoff aufweist.

3. Vorrichtung nach Anspruch 2, **dadurch gekennzeichnet, dass** das Heizmittel (C) Kohlenstofffasern oder Kohlenstoffnanoröhrchen umfasst.

4. Vorrichtung nach einem der vorstehenden Ansprüche, **dadurch gekennzeichnet, dass** die thermoplastische Trägerstruktur (T) durch einen Teilbereich der des Verbindungselements gebildet ist.

5. Vorrichtung nach einem der vorstehenden Ansprüche, **dadurch gekennzeichnet, dass** die Heizeinrichtung (H) einen Abschnitt der Wandung des Verbindungselements ersetzt.

6. Vorrichtung nach einem der vorstehenden Ansprüche, **dadurch gekennzeichnet, dass** die Wandung des Strömungskanals (1, 2, 3, 5, 6, 7, 8, 9, 10, 11, 12, 13) teilweise oder vollständig durch ein geschäumtes Kunststoffmaterial gebildet ist.

## Claims

1. Device for supplying air to an interior (I) of a vehicle, comprising
- a central fan (G) that is arranged on a flow input side, for generating a temperature-controlled air stream, in particular an air stream that is conditioned using an air-conditioning system,
- a plurality of flow channels (1, 2, 3, 5, 6, 7, 8, 9, 10, 11, 12, 13) for conveying and distributing the air stream to various locations of the interior (I),
wherein the flow channels (1, 2, 3, 5, 6, 7, 8, 9, 10, 11, 12, 13) each comprise at least one channel outlet (A2, A4, A6, A7, A8, A9, A10, A11, A12, A13) on the flow output side or at least one connection region (V1-7, V1-9, V3-11, V5-12) to one of the other flow channels (1, 2, 3, 5, 6, 7, 8, 9, 10, 11, 12, 13),
wherein at least one decentralised electrical heating device (H) that is spaced apart from the central fan (G) is arranged in the connection region (V1-7, V1-9, V3-11, V5-12) between interconnected flow channels (1, 3, 5, 7, 9, 11, 12),
**characterised in that**
the at least one heating device (H) is arranged in a separate connection element of the flow channel (13) to a further flow channel, wherein the heating device itself forms the connection element.

2. Device according to claim 1, **characterised in that** the decentralised heating device (H) comprises a thermoplastic support structure (T) and a carbon-based heating means (C) that is applied to the support structure (T) or integrated in the support structure (T).

3. Device according to claim 2, **characterised in that** the heating means (C) comprises carbon fibres or carbon nanotubes.

4. Device according to any of the preceding claims, **characterised in that** the thermoplastic support structure (T) is formed by a sub-region of the connection element.

5. Device according to any of the preceding claims, **characterised in that** the heating device (H) replaces a portion of the wall of the connection element.

6. Device according to any of the preceding claims, **characterised in that** the wall of the flow channel (1, 2, 3, 5, 6, 7, 8, 9, 10, 11, 12, 13) is formed in part or entirely by a foamed plastics material.

## Revendications

1. Dispositif d'arrivée d'air dans un habitacle (I) d'un véhicule, comprenant
- une soufflerie centrale (G) disposée côté entrée d'écoulement destinée à générer un flux d'air climatisé, en particulier conditionné au moyen d'une installation de climatisation,
- une pluralité de conduits d'écoulement (1, 2, 3, 5, 6, 7, 8, 9, 10, 11, 12, 13) destinée à acheminer et distribuer le flux d'air dans différents endroits de l'habitacle (I),
les conduits d'écoulement (1, 2, 3, 5, 6, 7, 8, 9, 10, 11, 12, 13) comportant respectivement au moins une sortie de conduit (A2, A4, A6, A7, A8, A9, A10, A11, A12, A13) côté sortie d'écoulement ou au moins une zone de raccordement (V1-7, V1-9, V3-11, V5-12) à un des autres conduits d'écoulement (1, 2, 3, 5, 6, 7, 8, 9, 10, 11, 12, 13),
au moins un dispositif de chauffage (H) électrique décentralisé, à distance de la soufflerie centrale (G), étant disposé dans la zone de raccordement (V1-7, V1-9, V3-11, V5-12) entre des conduits d'écoulement (1, 3, 5, 7, 9, 11, 12) reliés entre eux,
**caractérisé en ce que**
l'au moins un dispositif de chauffage (H) est disposé dans un élément de raccordement séparé du conduit d'écoulement (13) à un autre conduit d'écoulement, le dispositif de chauffage formant lui-même l'élément de raccordement.

2. Dispositif selon la revendication 1, **caractérisé en ce que** le dispositif de chauffage (H) décentralisé comporte une structure de support (T) thermoplastique et un moyen de chauffage (C) à base de carbone monté sur la structure de support (T) ou intégré dans la structure de support (T).

3. Dispositif selon la revendication 2, **caractérisé en ce que** le moyen de chauffage (C) comprend des fibres de carbone ou des nanotubes de carbone.

4. Dispositif selon l'une des revendications précédentes, **caractérisé en ce que** la structure de support (T) thermoplastique est formée par une zone partielle de l'élément de raccordement.

5. Dispositif selon l'une des revendications précédentes, **caractérisé en ce que** le dispositif de chauffage (H) remplace une partie de la paroi de l'élément de raccordement.

6. Dispositif selon l'une des revendications précédentes, **caractérisé en ce que** la paroi du conduit d'écoulement (1, 2, 3, 5, 6, 7, 8, 9, 10, 11, 12, 13) est formée en partie ou entièrement par une matière plastique expansée.
